# EUROPEAN PATENT APPLICATION

(11) **EP 1 850 162 A2**
(43) Date of publication of application: **31.10.2007**
(21) Application number: 07075483.3
(22) Date of filing: 30.12.2005
(51) Int. Cl.: G02B 7/02, G02B 3/14

(54) **Camera module**

(30) Priority: 28.02.2005 KR 20050016791
(62) Divisional of application: 05258124.6
(71) Applicant: Samsung Electro-Mechanics Co., Ltd., Suwon, Kyungki-do (KR)
(72) Inventor: Kim, Sung Chan, Seoul (KR)
(74) Representative: Powell, Timothy John

(57) **Abstract**

A camera module comprising:
a first lens frame having at least one liquid lens therein;
at least one second lens frame fastened with the first lens frame, having at least one solid lens fixed therein in optical alignment with the liquid lens; and
an image sensor disposed underneath a lower portion of the second lens frame to sense an image of an object introduced through the lenses, wherein the first and second lens frames are assembled together by stacking one on the other.

## Description

### CLAIM OF PRIORITY

This application claims the benefit of Korean Patent Application No. 2005-16791 filed on February 28, 2005, in the Korean Intellectual Property Office, the disclosure of which is incorporated herein by reference.

### BACKGROUND OF THE INVENTION

### Field of the Invention

The present invention relates to a camera module, and more particularly, to a camera module in which lens frames are assembled together by stacking to facilitate combining of lenses, increasing compatibility for different purposes, and also, the image sensor or the lens inside the module are protected from the contamination by particles that may be produced from the assembly of the lens frames.

### Description of the Related Art

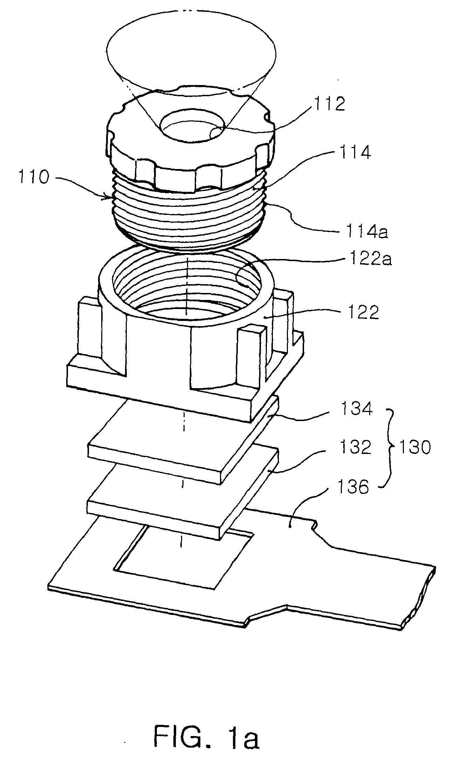

In general, a camera module includes a lens part having a lens therein, a housing assembled with the lens part, and a sensor part having an Infrared (IR) filter and an image sensor. More specifically, as shown in FIG. 1a, the lens part 110 includes a barrel 114 having a lens 112 therein. The number of lenses installed in the barrel 114 may be one or more depending on the desired functions and capabilities of a camera.

The housing 122 has an opening 122a for receiving the barrel 114, so that the barrel 114 is fastened with the opening 122a, and thus the lens part 110 and the housing 122 are assembled together. Here, male threads 114a are formed on the outer circumference of the barrel 114 and fastened with female threads formed on the inner circumference of the opening 122a, and thus, the barrel 114 is assembled with the housing 122.

In the meantime, the sensor part 130 is fixed to a lower portion of the housing 122. The sensor part 130 has a function of converting an image of the photographed object introduced through the lens 112 into electric signals to form a picture.

In order to carry out the above function, the sensor part 130 is provided with an image sensor 132 and an IR filter 134. First, infrared rays of the photographed image introduced through the lens 112 are filtered by the IR filter 134, and then visible rays of the image are sensed by the image sensor 132.

Here, the image sensor 132 is electrically connected with signal-transmission means, for example, a Flexible Printed Circuit (FPC) 136. That is, the object image sensed by the image sensor 132 is converted into electric signals also by the image sensor 132 and transmitted through the FPC 136 to form a picture through display means (not shown) such as Liquid Crystal Display (LCD).

As described above, the lens part 110 has the barrel 114 with the lens 112 installed therein. Therefore, when there is a need to adjust the functions and capabilities of the camera by changing the number or combination of lenses, it is difficult to carry out the adjustment procedures since a new barrel is required to accommodate the changes with the lenses.

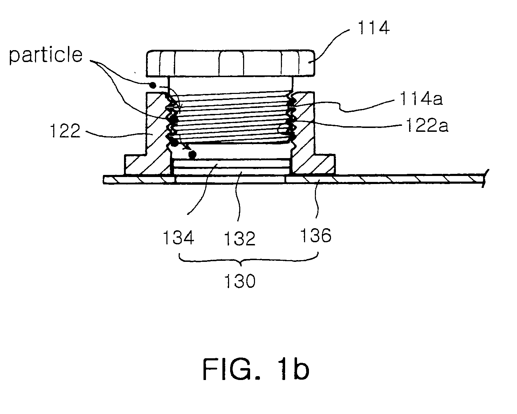

Also, as shown in FIG. 1b, the barrel 114 and the housing 122 are assembled together by the male and female threads thereof. At this time, particles may be produced as the threads abrade each other when contacting to be engaged together. The particles may fall on the IR filter between the male and female threads, adversely affecting the image introduced into the image sensor 132.

### SUMMARY OF THE INVENTION

The present invention has been made to solve the foregoing problems of the prior art and it is therefore an obj ect of the present invention to provide a camera module in which lens frames are assembled together by stacking to facilitate combining of lenses, increasing compatibility for different purposes, and also, the image sensor or the lens inside module are protected from the contamination by particles that may be produced from the assembly of the lens frames.

According to an aspect of the invention for realizing the object, there is provided a camera module including: a first lens frame having at least one first lens therein; at least one second lens frame fastened with the first lens frame, having a second lens fixed therein in optical alignment with the first lens; and an image sensor disposed in the lower portion of the second lens frame to sense a photographed image introduced through the lenses, wherein the first and second lens frames are assembled together.

Preferably, the first lens frame has a fastening protrusion formed in a lower portion, and the second lens frame has a fastening opening formed in an upper portion to receive the fastening protrusion of the first lens frame and a fastening protrusion formed in a lower portion with a configuration to fit into.

Preferably, the first lens frame has a fastening opening formed in a lower portion, and the second lens frame has a fastening protrusion formed in an upper portion received in the fastening opening of the first lens frame and a fastening opening formed in a lower portion with a configuration to receive.

Moreover, the fastening opening and the fastening protrusion are disposed outside of image regions of the first and second lenses. The fastening protrusion has male threads and the fastening opening has female threads to be screwed into the male threads of the fastening protrusion.

Alternatively, the first lens frame has a fastening hole formed in a lower portion, and the second lens frame has a fastening pin formed in an upper portion to be inserted into the fastening hole of the first lens frame and a fastening hole formed in a lower portion with a configuration to fixedly receive the fastening pin.

More preferably, the first lens has means for rotating the lens to adjust the focus of the lens, and the rotation means may comprise a handle or a hole with either a lever or a jig.

According to another aspect of the invention for realizing the above described object, there is provided a camera module including: a first lens frame having at least one liquid lens therein; at least one second lens frame fastened with the first lens frame, having at least one solid lens fixed therein in optical alignment with the liquid lens; and an image sensor disposed in the lower portion of the second lens frame to sense a photographed image introduced through the lenses, wherein the first and second lens frames are assembled together by stacking one on the other.

Preferably, the first lens frame comprises an upper liquid lens part and a lower liquid lens part, the upper liquid lens part stacked on and fastened with the lower liquid lens part, forming a lens cavity.

Preferably, the upper liquid lens part has a fastening opening formed in a lower portion, and the lower liquid lens part has a fastening protrusion formed in an upper portion to be received in the fastening opening of the upper liquid lens part and a fastening opening formed in a lower portion with a configuration to receive.

Preferably, the upper liquid lens part has a fastening protrusion formed in a lower portion, and the lower liquid lens part has a fastening opening formed in an upper portion to receive the fastening protrusion of the upper liquid lens part and a fastening protrusion formed in a lower portion with a configuration to fit into.

Moreover, the fastening opening and the fastening protrusion are disposed outside of image regions of the liquid lens, the solid lens, a central lens of a solid lens connecting part, and a central lens of a lower solid lens part. The fastening protrusion has male threads and the fastening opening has female threads to be screwed into the male threads of the fastening opening.

Alternatively, the upper liquid lens part may have a fastening hole formed in a lower portion, and the lower liquid lens part may have a fastening pin formed in an upper portion to be inserted into the fastening hole of the upper liquid lens part and a fastening hole formed in a lower portion with a configuration to fixedly receive the fastening pin.

Preferably, the second lens frame includes an upper solid lens part having an upper solid lens, a solid lens connecting part having a central lens, and a lower solid lens part having a lower central lens.

Preferably, the upper solid lens part has a fastening opening formed in a lower portion, the solid lens connecting part has a fastening protrusion formed in an upper portion to fit into the fastening opening of the upper solid lens part and a fastening protrusion formed in a lower portion with a configuration to fit into a fastening opening formed in an upper portion of the lower solid lens part.

Alternatively, the upper solid lens part may have a fastening protrusion formed in a lower portion, the solid lens connecting part may have a fastening opening formed in an upper portion to receive the fastening protrusion of the upper solid lens part and a fastening opening formed in a lower portion to receive a fastening protrusion formed in an upper portion of the lower solid lens protrusion part.

The fastening opening and the fastening protrusion are disposed outside of image regions of the upper solid lens, a central lens for the solid lens connecting part, and a central lens for the lower solid lens part. The fastening protrusion has male threads and the fastening opening has female threads to be screwed into the male threads of the fastening protrusion.

Alternatively, the upper solid lens part may have a lower fastening hole formed in a lower portion, the solid lens connecting part may have an upper fastening pin formed in an upper portion to be fit into the lower fastening hole of the upper solid lens part and a lower fastening hole formed in a lower portion with a configuration to fixedly receive the upper fastening pin, and the lower solid lens part has an upper fastening pin formed in an upper portion to fit into the lower fastening hole of the solid lens connecting part and a lower fastening hole formed in a lower portion.

Preferably, the solid lens connecting part is stacked between the upper solid lens part and the lower solid lens part.

Moreover, the first liquid lens includes non-conductive oil-based liquid filled in a lower central portion of the liquid lens, and conductive water-based liquid injected into the lens cavity formed between the upper and lower liquid lens parts fastened with each other.

Preferably, the camera module further includes: at least two micro-tubes provided in side portions of the upper liquid lens part and/or the lower liquid lens part; a pump connected to one of the micro-tubes; and a liquid storage structure connected to the rest of the micro-tubes and filled with conductive water-based liquid, whereby the first liquid lens is formed by filling in the lens cavity, without producing any air bubbles, with the conductive water-based liquid in the amount equivalent to the amount vacuumed through the micro-tube connected to the liquid storage structure, due to the atmospheric pressure difference occurring as the inner air is drawn out from the lens cavity through the micro-tube connected to the pump.

### BRIEF DESCRIPTION OF THE DRAWINGS

The above and other objects, features and other advantages of the present invention will be more clearly understood from the following detailed description taken in conjunction with the accompanying drawings, in which:

FIG. 1a is an exploded perspective view of a conventional camera module; and FIG. 1b is an assembled cross-sectional view of the camera module shown in FIG. 1a;

FIG. 2a is an exploded perspective view of an embodiment of a camera module according to the present invention; and FIG. 2b is an assembled cross-sectional view of the camera module shown in FIG. 2a;

FIG. 3a is an exploded perspective view of another embodiment of the camera module according to the present invention; and FIG. 3b is an assembled cross-sectional view of the camera module shown in FIG. 3a;

FIG. 4 is an exploded perspective view of further another embodiment of the camera module according to the present invention;

FIGS. 5a and 5b illustrate rotation means provided in the first lens of the camera module according to the present invention, in which FIG. 5a illustrates a handle as the rotation means, and FIG. 5b illustrates a hole as the rotation means;

FIG. 6 is a sectional view illustrating a camera module according to the present invention having a combination of liquid and solid lenses; and

FIG. 7 is an exploded view illustrating a camera module of yet another embodiment according to the present invention having a combination of liquid and solid lenses assembled in multiple stacks.

### DETAILED DESCRIPTION OF THE PREFERRED EMBODIMENT

Preferred embodiments of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

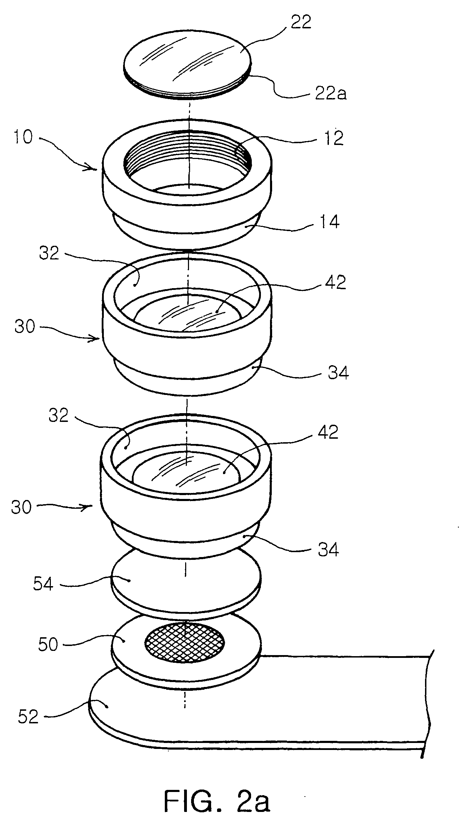

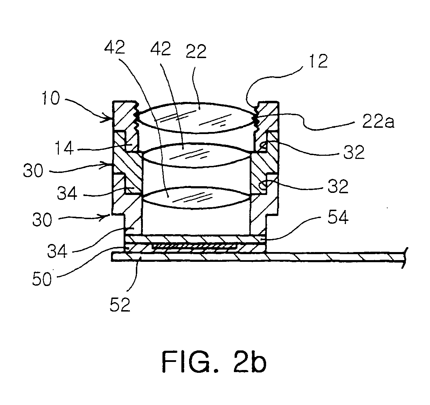

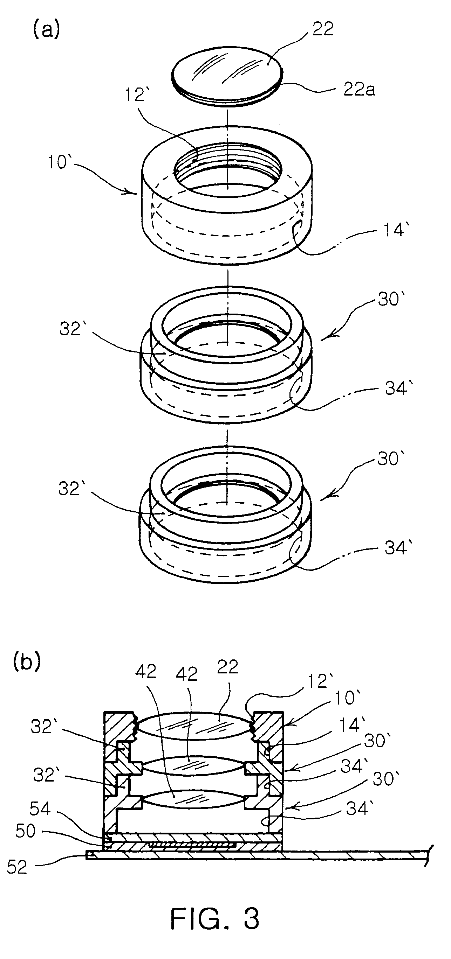

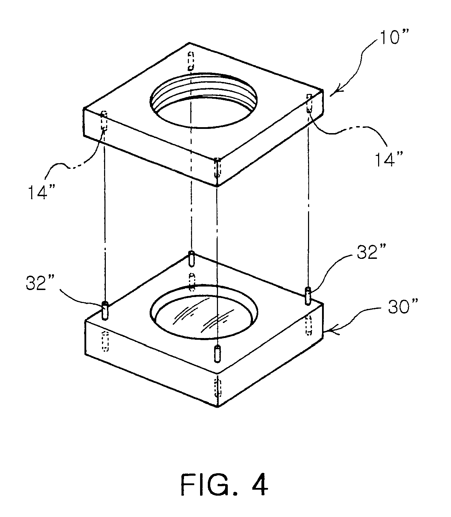

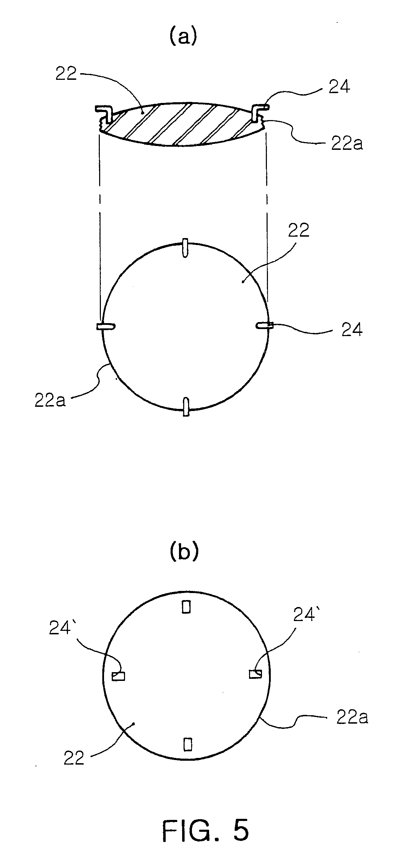

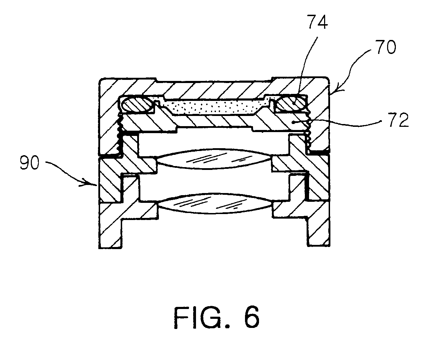

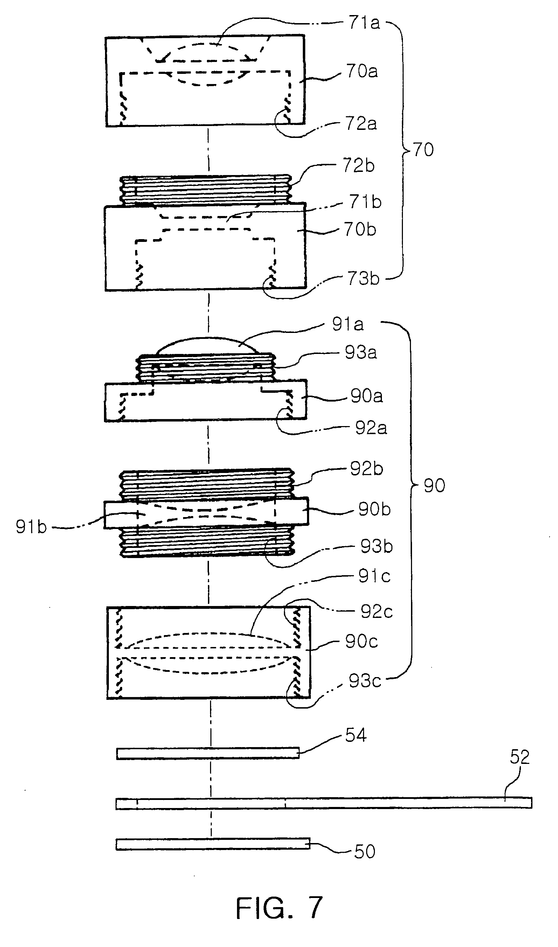

FIG. 2a is an exploded perspective view of an embodiment of a camera module according to the present invention; and FIG. 2b is an assembled cross-sectional view of the camera module shown in FIG. 2a. FIG. 3a is an exploded perspective view of another embodiment of the camera module according to the present invention; and FIG. 3b is an assembled cross-sectional view of the camera module shown in FIG. 3a. FIG. 4 is an exploded perspective view of further another embodiment of the camera module according to the present invention. FIGS. 5a and 5b illustrate rotation means provided in the first lens of the camera module according to the present invention, in which FIG. 5a illustrates a handle as the rotation means, and FIG. 5b illustrates a hole as the rotation means. FIG. 6 is a sectional view illustrating a camera module according to the present invention having a combination of liquid and solid lenses. FIG. 7 is an exploded view illustrating a camera module of yet another embodiment according to the present invention having a combination of liquid and solid lenses assembled in multiple stacks.

The present invention relates to a camera module in which lens frames are assembled together by stacking to facilitate combining of lenses, increasing compatibility for different purposes, and also, the image sensor or the lens inside module are protected from contamination by particles that may be produced from the assembly of the lens frames.

As shown in FIGS. 2a and 2b, the camera module includes a first lens frame 10, upper and lower second lens frames 30, an IR filter 54 having various shapes like a rectangle, a circle and a polygon, and an image sensor 50. The structures of these constituent parts will be explained below.

The first lens frame 10 is a hollow body with a perforated center with a first lens 22 screwed thereinto. That is, male threads 22a are formed on the outer circumference of the first lens 22, and female threads 12 are formed on the inner circumference of the first lens frame 10, so that the male threads 22a of the first lens 22 is screwed into the female threads 12 of the first lens frame 10.

The first lens 22 is assembled with the first lens frame 10, rotating and moving in an axial direction of the first lens frame 10 to enable adjustment of focus.

The first lens frame 10 has a fastening protrusion 14 protruding from the lower surface thereof, which fits into a fastening opening 32 of the upper second lens frame 30, which will be explained hereinbelow.

Next, with references to FIGS. 2a and 2b, the upper second lens frame 30 has the fastening opening 32 in a lower portion for receiving the fastening protrusion 14 of the first lens frame so that the first lens frame 10 is stacked on the second lens frame 30. In the center of the fastening opening 32, a second lens 42 is fixed therein, and underneath the fastening opening 32, a fastening protrusion 34 is protruded to fit into a fastening opening 32 of the lower second lens frame 30.

As mentioned above, the upper second lens frame 30 is assembled in a lower portion thereof with the lower second lens frame 30. That is, the fastening protrusion 34 formed in a lower portion of the upper second lens frame 30 is inserted into the fastening opening 32 formed in an upper portion of the lower second lens frame 30, thereby continuous stacking of the second lens frames 30 is possible.

As shown in FIG. 2b, the stackable structure of the lens frame allows fixing therein different types of lenses such as convex and/or concave, symmetrical and/or non-symmetrical, spherical and/or non-spherical, circular and/or polygonal and assembling the upper and lower second lens frames 30 by stacking to facilitate combining or combined uses of diverse forms of lenses.

As described above, a plurality of second lens frames 30 are stacked underneath the first lens frame 10, and thus the light reflected from the photographed object is introduced through the first lens 22 and the plurality of second lenses 42.

At this time, the image sensor 50 is disposed underneath the lowermost second lens frame. The image sensor 50 senses the image of the photographed object passed through the first and second lenses 22 and 42 to convert the image into electric signals and then form a picture through display means such as LCD.

In order for the above process, the image sensor 50 is electrically connected to signal-transmission means 52 for transmitting electric signals, for example, Flexible Printed Circuit (FPC) or circuit board. The signal-transmission means 52 are electrically connected with the display means (not shown) mentioned above, to transmit image signals, which are converted into electric signals by the image sensor 50, to the display means (not shown).

The image sensor 50 may be provided with an Infrared (IR) filter 54 fixed thereto, in order to filter parts of the image of the photographed object introduced through the first and second lenses 22 and 42 into the image sensor 50.

It has been explained and illustrated that the first and second lens frames 10 and 30 each have the fastening protrusion 34 and the fastening opening 32, and the fastening protrusion 34 in a lower portion of the upper second lens frame 30 fits into the fastening opening 32 formed in an upper portion of the lower second lens frame, forming a stacked structure. However, the structure can also be modified as shown in FIGS. 3a and 3b.

In other words, as shown in FIGS. 3a and 3b, the structure may be modified so that the first and second lens frames 10' and 30' each have a fastening opening 14' and a fastening protrusion 32'.

That is, the first lens frame 10' has a fastening opening 14' formed in a lower portion, and upper second lens frame 30' has a fastening protrusion 32' in an upper portion inserted into the fastening opening 14' of the first lens frame 10' and a fastening opening 34' formed in a lower portion to receive the fastening protrusion 32' of the lower second lens frame 30'. Such modified structure differs from the above described embodiment only with the fastening openings and fastening protrusions for stacking the first and second lens frames 10' and 30'. The remaining constituent parts are the same, and thus the explanation on each component in the modified structure is not necessary.

In both embodiments described above, female threads are formed on the inner circumference of the fastening openings 32, 14' , whereas male threads are formed on the outer circumference thereof, thereby the first lens frame 10, 10' is assembled with the plurality of second lens frames 30, 30' through the engagement of the male and female threads formed in the fastening openings and protrusions.

In the above described embodiments, the first and second lens frames are illustrated as having a circular shape but they may be in other shapes including rectangular or polygonal shapes. In addition to the fastening structure using fastening protrusions and openings described above, either the first or second lens frame may be provided with a fastening pin 32" while the other one is provided with a fastening hole 14" to receive the fastening pin 32", thereby assembling the first lens frame 10" with the second lens frame 30".

In addition, the first lens 22 may have means for rotating the lens with respect to the first lens frame. As shown in FIG. 5a, the rotation means may be handles 24 protruded from an upper portion of the first lens 22, or as shown in FIG. 5b, holes 24' formed on the first lens 22. Therefore, the first lens 22 may be rotated by using the handle 24 or inserting a jig or a lever into the hole 24'.

In the meantime, the above described first and second lenses 22 and 42 may be solid lenses in the solid state including concave, convex lenses and other non-symmetrical shapes of lenses, but also may be liquid lenses in the liquid state which allows adjusting focus distance using surface tension of liquid. Therefore, one or more of the first and second lenses 22 and 42 described above do not have to be restricted to particular shapes and materials. They may be concave and/or convex, symmetrical and/or non-symmetrical, spherical and/or non-spherical, and circular or polygonal, and still allow the same effects of the invention described above.

FIG. 6 illustrates an example of combination of the liquid and solid lenses using the camera module according to present invention. That is, as shown in FIG. 6, a liquid lens is formed through injection inside the first lens frame, and underneath the first lens frame 70, more than one second lens frames 90 can be assembled by stacking, so that a single and/or plural number of solid lens are assembled with a single and/or plural number of solid lens.

In order to apply the liquid lens as described above, as shown in FIG. 6, a supplementary frame 72 is screwed into the first lens frame 70, and the gap between these two is sealed with sealing members such as oil-ring 74. Then, liquid for forming the liquid lens is injected between the first lens frame 70 and the supplementary frame 72.

A liquid lens is formed by filling conductive water-based liquid and non-conductive oil-based liquid in a sealed space so that the spherical interface between the two liquids functions as a lens. Particularly, the voltage applied to the conductive liquid is adjusted to control the interface between the two liquids, thereby adjusting the focus distance. In other words, the voltage applied to the conductive liquid is adjusted to increase or decrease the thickness of the lens to adjust the focus distance.

In the camera module with above constitution, the first lens frame 70 threadly engaged with the first lens which is the objective lens and the plurality of second lens frames 90 each with the second lens fixed therein are assembled by stacking, allowing diverse combinations of lenses. Also, more second lens frames 90 can be additionally assembled by stacking, facilitating the change in the number of lenses used.

In addition, the first and second lens frames are provided in such a way that the fastening protrusions and openings are disposed outside of image regions of the lenses and the image sensor, thus precluding particles that may be produced by the wear of the first and second lens frames from falling into image regions of the lenses or the image sensor, thereby preventing formation of defective image due to such particles.

FIG. 7 illustrates another embodiment of combination of liquid and solid lenses in the camera module according to the present invention. As shown in FIG. 7, the first lens frame 70 includes an upper liquid lens part 70a and a lower liquid lens part 70b. Depending on the needs and purposes, a liquid lens 71a may be formed as convex and/or concave lens in a central portion of an upper surface of the upper liquid lens part 70a, adjusting the amount of light and/or optical characteristics. In FIG. 7, the liquid lens 71a is illustrated as having a shape of convex lens, but does not need to be restricted to particular shapes and materials. It may be concave and/or planar, symmetrical and/or non-symmetrical, spherical and/or non-spherical, and circular and/or polygonal, and still allows the above described effects of the present invention.

In addition, according to the needs and purposes, and regardless of the location of stacking, at least one first lens frame 70 having at least one liquid lens 71a can be stacked on at least one second lens frame 90 having at least one solid lens, obtaining combinations of a plurality of liquid lenses with a plurality of solid lenses.

The second lens frame 90 includes the upper liquid lens part 70a having the liquid lens (not shown) therein, and the lower liquid lens part 70b having solid lenses. The upper liquid lens part 70a is stacked on and fastened with the lower liquid lens part 70b, forming a lens cavity that delineates the shape of the liquid lens.

Here, the upper liquid lens part 70a has a fastening opening 72a in a lower portion, whereas the lower liquid lens part 70b has a fastening protrusion 72a in an upper portion to fit into the fastening opening 72a of the upper liquid pens part 70a and a fastening opening 73b in a lower portion to receive a fastening protrusion 93a of the upper solid lens part 90a, which will be explained below.

In addition, the upper liquid lens part 70a may have an additional fastening protrusion in an upper part to fit into a fastening opening in a lower part of another liquid lens part.

It is preferable that the fastening opening 72a and the fastening protrusion 72b provided in the upper and lower liquid lens parts 70a and 70b are disposed outside of image region of the liquid lens 71a. It is preferable that the fastening opening 72a has female threads and the fastening protrusion 72b has male threads, so that they are threadly engaged and then bonded to each other.

In addition, the upper liquid lens part 70a may have a fastening hole formed in a lower portion, and the lower liquid lens part 70b may have a fastening pin formed in an upper portion to be inserted into the fastening hole of the upper liquid lens part 70a and a fastening hole formed in a lower part to receive another fastening pin underneath.

On the other hand, the second lens frame 90 stacked underneath the first lens frame 70 is provided with at least one upper solid lens 91a, central lens for solid lens connecting part 91b, and lower central lens 91c fixed therein to pass an object image introduced through the liquid lens 71a.

The second lens frame 90 is formed by successively stacking an upper solid lens part 90a having an upper solid lens 91a on a solid lens connecting part 90b having a central lens, and on a lower solid lens part having a lower central lens.

The upper solid lens part 90a has a fastening protrusion 93a formed in an upper part to fit into the fastening opening 73b of the lower liquid lens part 70b and a fastening opening in a lower part to receive another fastening protrusion underneath.

In addition, the solid lens connecting part 90b has a fastening protrusion 92b formed in an upper part to fit into a fastening opening 92a of the upper solid lens part 90a and a fastening protrusion 93b formed in a lower part to fit into a fastening opening of the lower solid lens part 90c.

The lower solid lens part 90c has a fastening opening 92c formed in an upper part to receive a fastening protrusion 93b of the solid lens connecting part 90b, and a fastening opening 93c formed in a lower part to be assembled with the IR filter, the image sensor or another first lens frame having liquid lens and/or another second lens frame having solid lens.

Conversely, the fastening opening of the lower liquid lens part 70b may be substituted with a fastening protrusion, and the upper fastening protrusion of the upper solid lens part 90a substituted with a fastening opening, and still yields the same stacking and combining effects of the present invention.

Further, the lower solid lens part 90c may have a fastening opening in an upper part to receive the fastening protrusion, and a fastening protrusion formed in a lower part with a configuration to fit into the fastening opening.

Moreover, depending on the needs and purposes, more than one solid lens connecting part 90b having a fastening protrusion in an upper part and a fastening opening in a lower part (or reverse) can be stacked on one another.

The fastening openings 92a, 92c, and 93c, and the fastening protrusions 93a, 92b, and 93b formed in the upper solid lens part 90a, the solid lens connecting part 90b, and the lower solid lens part 90c are disposed outside of image regions of the upper solid lens 91a, the central lens for solid lens connecting part 91b, and the lower central lens for lower solid lens part 91c. Each fastening opening 92a, 92c, 93c has female threads and each fastening protrusion 93a, 92b, 93b has male threads to be screwed into each female threads of the fastening opening 92a, 92c, 93c.

Alternatively, the upper solid lens part 90a and the solid lens connecting part 90b each may have a fastening hole in each lower part, whereas the solid lens connecting part 90b and the lower solid lens part 90c each may have a fastening pin in each upper part and a fastening hole in each lower part to receive the fastening pin, so that they can be stacked in succession to be assembled.

Between the upper solid lens part 90a, and the lower solid lens part 90c, the solid lens connecting part 90b having a central lens for solid lens connecting part 91b is stacked. The solid lens connecting part 90b has a fastening protrusion 92b in an upper portion to fit into the fastening opening 92a of the upper solid lens part 90a, and also a fastening protrusion 93b formed in a lower portion to fit into the fastening opening 92c of the lower solid lens part 90c.

In the camera module shown in FIG. 7, in order to apply a liquid lens to the upper and lower liquid lens parts 70a and 70b, a predetermined amount of non-conductive oil-based liquid is injected in a central portion of the lower liquid lens part 70b, and the upper and lower liquid lens parts 70a and 70b are assembled together using threads and/or fastening protrusions and openings. Then, the fastened areas are sealed with bonding materials such as resin and a bonding agent, and conductive water-based liquid is injected thereinto.

The present invention allows sufficient effects from thread-engagement or fastening protrusions and openings. In order to prevent the problems with the conventional method of injecting water-based liquid, in which air bubbles are produced in the liquid lens affecting the image introduced to the image sensor 132 and the adjustment of focus of the liquid lens, and resulting in a defective picture, the present invention utilizes at least two micro-tubes (not shown) provided in upper ends of the upper liquid lens part (and/or lower ends and/or' side portions of the lower liquid lens part). For example, in case of two or more micro-tubes, one micro-tube is connected to a pump while the other one is connected to a reservoir of conductive water-based liquid. As the inner air is drawn out through one micro-tube, the lens cavity is filled with conductive water-based liquid in the amount equivalent to the amount vacuumed through the other micro-tube, filling in the entire lens cavity with conductive water-based liquid without producing any air bubbles.

Alternatively, in case of two or more micro-tubes, one micro-tube is connected to a pump and the inner air is drawn out through the micro-tube from the reservoir of conductive liquid. Then, the conductive water-based liquid fills the lens cavity in the amount equivalent to the amount vacuumed through the other micro-tube, filling in the entire lens cavity with the conductive water-based liquid without producing any air bubbles.

When the lens cavity formed by the assembly of the upper liquid lens part and the lower liquid lens part is completely filled with the conductive water-based liquid, the micro-tubes are cut and simultaneously sealed with laser. Also, the micro-tubes may be cut with physical cutting means such as a knife, scissors, and a nipper and then sealed with sealing material such as a bonding agent. At this time, the micro-tubes block the outer air from permeating inside through equilibrium between the inner and outer atmospheric pressure.

In addition, the voltage applied to the conductive liquid may be adjusted to increase or decrease the thickness of the liquid lens to adjust the focus distance of the lens.

The solid lens connecting part stacked between the upper solid lens part 90a and the lower solid lens part 90c mainly functions as connecting means of the camera modules in addition to accommodating the basic function of lens. Also, more than one solid lens connecting parts can be assembled by stacking, allowing combinations of a single and/or plural number of liquid lens and a single and/or plural number of solid lens.

In addition, the solid lens connecting part 90b may have one or more lenses in diverse forms such as concave and/or convex, symmetrical and/or non-symmetrical, spherical and/or non-spherical, and circular and/or polygonal depending on the given purpose. Also, depending on the intended usage, the lens frame can be made of flexible material to be bent in 'L' and 'C' shapes, and can have a reflector and a prism to maintain and enhance optical characteristics.

According to the present invention, the first lens frame having the first lens screwed thereinto, and a plurality of second lens frames each having the second lens fixed thereinto are assembled together by stacking, facilitating combining or combined uses of diverse forms of lenses. Further, more second lens frames can be additionally assembled by stacking to conveniently change the number of lenses used.

Furthermore, the first and second lens frames are formed in such a way that the fastening protrusions and openings are disposed outside of image regions of the lenses or the image sensor, precluding particles that may be produced as the first and second lens frames abrade each other by contacting to be assembled together, thereby preventing defective pictures due to such particles.

While the present invention has been shown and described in connection with the preferred embodiments, it will be apparent to those skilled in the art that modifications and variations can be made without departing from the spirit and scope of the invention as defined by the appended claims.

## Claims

1. A camera module comprising:
a first lens frame having at least one liquid lens therein;
at least one second lens frame fastened with the first lens frame, having at least one solid lens fixed therein in optical alignment with the liquid lens; and
an image sensor disposed in the lower portion of the second lens frame to sense an image of an object introduced through the lenses, wherein the first and second lens frames are assembled together by stacking one on the other.

2. The camera module according to Claim 1, wherein the first lens frame comprises an upper liquid lens part and a lower liquid lens part, the upper liquid lens part stacked on and fastened with the lower liquid part, forming a lens cavity.

3. The camera module according to Claim 2, wherein the upper liquid lens part has a fastening opening formed in a lower portion, and the lower liquid lens part has a fastening protrusion formed in an upper portion to be received in the fastening opening of the upper liquid lens part and a fastening opening formed in a lower portion with a configuration to receive a fastening protrusion.

4. The camera module according to Claim 2, wherein the upper liquid lens part has a fastening protrusion formed in a lower portion, and the lower liquid lens part has a fastening opening formed in an upper portion to receive the fastening protrusion of the upper liquid lens part and a fastening protrusion formed in a lower portion with a configuration to fit into a fastening opening.

5. The camera module according to Claims 3 or 4, wherein the fastening opening and the fastening protrusion are disposed outside of image regions of the liquid lens, the solid lens, a central lens of a solid lens connecting part, and a central lens of a lower solid lens part.

6. The camera module according to Claims 3 or 4, wherein the fastening protrusion has male threads and the fastening opening has female threads to be screwed into the male threads of the fastening opening.

7. The camera module according to Claim 2, wherein the upper liquid lens part has a fastening hole formed in a lower portion, and the lower liquid lens part has a fastening pin formed in an upper portion to be inserted into the fastening hole of the upper liquid lens part and a fastening hole formed in a lower portion with a configuration to fixedly receive the fastening pin.

8. The camera module according to Claim 1, wherein the second lens frame comprises an upper solid lens part having an upper solid lens, a solid lens connecting part having a central lens, and a lower solid lens part having a lower central lens.

9. The camera module according to Claim 8, wherein the upper solid lens part has a fastening opening formed in a lower portion, the solid lens connecting part has a fastening protrusion formed in an upper portion to fit into the fastening opening of the upper solid lens part and a fastening protrusion formed in a lower portion with a configuration to fit into a fastening opening formed in an upper portion of the lower solid lens part.

10. The camera module according to Claim 8, wherein the upper solid lens part has a fastening protrusion formed in a lower portion, the solid lens connecting part has a fastening opening formed in an upper portion to receive the fastening protrusion of the upper solid lens part and a fastening opening formed in a lower portion to receive a fastening protrusion formed in an upper portion of the lower solid lens protrusion part.

11. The camera module according to Claims 9 or 10, wherein the fastening opening and the fastening protrusion are disposed outside of image regions of the upper solid lens, a central lens for the solid lens connecting part, and a central lens for the lower solid lens part.

12. The camera module according to Claims 9 or 10, wherein the fastening protrusion has male threads and the fastening opening has female threads to be screwed into the male threads of the fastening protrusion.

13. The camera module according to Claim 8, wherein the upper solid lens part has a lower fastening hole formed in a lower portion, the solid lens connecting part has an upper fastening pin formed in an upper portion to be fit into the lower fastening hole of the upper solid lens part and a lower fastening hole formed in a lower portion with a configuration to fixedly receive the upper fastening pin, and the lower solid lens part has an upper fastening pin formed in an upper portion to fit into the lower fastening hole of the solid lens connecting part and a lower fastening hole formed in a lower portion.

14. The camera module according to Claim 8, wherein the solid lens connecting part is stacked between the upper solid lens part and the lower solid lens part.

15. The camera module according to Claim 2, wherein the first liquid lens comprises non-conductive oil-based liquid filled in a lower central portion of the liquid lens, and conductive water-based liquid injected into the lens cavity formed between the upper and lower liquid lens parts fastened with each other.

16. The camera module according to Claim 15, further comprising:
at least two micro-tubes provided in side portions of the upper liquid lens part and/or the lower liquid lens part;
a pump connected to one of the micro-tubes; and
a liquid storage structure connected to the rest of the micro-tubes and filled with conductive water-based liquid, whereby the first liquid lens is formed by filling in the lens cavity, without producing any air bubbles, with the conductive water-based liquid in the amount equivalent to the amount vacuumed through the micro-tube connected to the liquid storage structure, due to the atmospheric pressure difference occurring as the inner air is drawn out from the lens cavity through the micro-tube connected to the pump.

17. A camera module comprising:
a first lens frame having at least one first lens therein;
at least one second lens frame fastened with the first lens frame, having a second lens fixed therein in optical alignment with the first lens; and
an image sensor disposed in the lower portion of the second lens frame to sense an image of an object introduced through the lenses, wherein the first and second lens frames are assembled together.

18. The camera module according to Claim 17, wherein the first lens frame has a fastening protrusion formed in a lower portion, and the second lens frame has a fastening opening formed in an upper portion to receive the fastening protrusion of the first lens frame and a fastening protrusion formed in a lower portion with a configuration to fit into.

19. The camera module according to Claim 17, wherein the first lens frame has a fastening opening formed in a lower portion, and the second lens frame has a fastening protrusion formed in an upper portion received in the fastening opening of the first lens frame and a fastening opening formed in a lower portion with a configuration to receive.

20. A camera module according to Claims 18 or 19, wherein the fastening opening and the fastening protrusion are disposed outside of image regions of the first and second lenses.

21. The camera module according to Claims 18 or 19, wherein the fastening protrusion has male threads and the fastening opening has female threads to be screwed into the male threads of the fastening protrusion.

22. The camera module according to Claim 17, wherein the first lens frame has a fastening hole formed in a lower portion, and the second lens frame has a fastening pin formed in an upper portion to be inserted into the fastening hole of the first lens frame and a fastening hole formed in a lower portion with a configuration to fixedly receive the fastening pin.

23. The camera module according to Claim 17, wherein the first lens has means for rotating the lens to adjust the focus of the lens.

24. The camera module according to Claim 23, wherein the rotation means comprise a handle, or a hole with either a lever or a jig.
